# EUROPÄISCHE PATENTSCHRIFT

(11) **EP 1 078 690 B1**
(45) Veröffentlichungstag und Bekanntmachung des Hinweises auf die Patenterteilung: **12.10.2011**
(21) Anmeldenummer: 00117275.8
(22) Anmeldetag: 16.08.2000
(51) Int. Cl.: B01J 45/00, C08F 8/30, C08F 8/12, C08F 8/00, C08F 212/08, C08F 212/36, C02F 1/42

(54) **Verfahren zur Herstellung von monodispersen Ionenaustauschern mit chelatisierenden Gruppen**
Method for producing monodisperse ion exchangers with chelating groups
Méthode pour la préparation d'échangeurs d'ions monodisperses contenant des groupes chélatants

(30) Priorität: 27.08.1999 DE 19940866; 12.11.1999 DE 19954399
(43) Veröffentlichungstag der Anmeldung: 28.02.2001
(73) Patentinhaber: LANXESS Deutschland GmbH, 51369 Leverkusen (DE)
(72) Erfinder: Klipper, Reiinhold, Dr., 50933 Köln (DE); Strüver, Werner, Dr., 51375 Leverkusen (DE); Schnegg, Ulrich, Dr., 51377 Leverkusen (DE); Hees, Bruno, 40764 Langenfeld (DE); Lehmann, Bernhard, 52072 Aachen (DE); Lütjens, Holger, Dr., 51069 Köln (DE)

(56) Entgegenhaltungen:
- EP-A- 0 046 535
- EP-A- 0 278 411
- EP-A- 0 356 803
- WO-A-91/16972
- US-A- 4 232 125

## Beschreibung

Gegenstand der vorliegenden Erfindung ist ein Verfahren zur Herstellung von neuen, monodispersen Ionenaustauschern mit chelatisierenden, funktionellen Gruppen.

EP-A 0 356 803 betrifft ein Verfahren zur Entfernung mehrwertiger Kationen aus Monochromatlösungen, die nach diesem Verfahren erhältlichen Monochromatlösungen und die Verwendung dieser Lösungen als Elektrolyt zur elektrochemischen Herstellung von Dichromaten und Chromsäure unter Einsatz von Perlpolymeren auf Basis von vernetztem Polystyrol mit chelatisierenden Gruppen.

US-A 4,232,125 betrifft die Synthese eines vernetzten Polymers einer diarylaminoalkylierten Monovinyliden-aromatischen Verbindung indem man das Polymer mit einem Aldehyd und einem Diacylamin in Gegenwart einer Säure als Katalysator in Kontakt bringt.

WO-A-91/16972 beschreibt ein Verfahren zur Herstellung von komplexbildenden 8-Hydroxychinolingruppen enthaltenden Ionenaustauscherharzen, herstellbar aus Trägermaterialien, welche mit Aldehyden reative Aminogruppen enthalten, sowie Aldehyde, 8-Hydroxychinolin- und/oder 8-Hydroxychinolinderivate und deren Verwendung zur selektiven Extraktion von Metallen aus wässrigen Lösungen.

EP-A 0 278 411 offenbart ein komplexbildendes Harz des Geltyps in Form von Perlen aus einem vernetzten Polymer mit einem Perlenaufbau aus Kern und Außenhülle und alkylaminophosphoniumfunktionellen Gruppen, das sich insbesondere zur Entfernung von mehrwertigen Erdakaliionen und/oder Schwermetallkationen eignet, weil es eine ausgezeichnete Verbindung von Kationenkapazität und Widerstand gegen Perlenbruch aufweist. Als komplexbildende funktionelle Gruppen können Alkylaminophosphoniumgruppen oder Aminodiessigsäuregruppen vorhanden sein. Die Perlen werden hergestellt durch ein spezielles Verfahren, das einen geringeren Anteil von Vernetzung in der Außenhülle im Vergleich zum Kern der Perle ergibt. Wegen der überraschenden Kombination von dynamischer Kapazität, osmotischer Druckbeständigkeit und physikalischer Festigkeit eignen sich die Perlen insbesondere zur Entfernung von Calcium aus Sole für die spätere Verwendung der aufbereiteten Lösung in Membranelektrolysezellen zur Herstellung von Chlor.

Aus US-A 4 444 961 ist ein Verfahren zur Herstellung monodisperser, makroporöser Chelatharze bekannt. Hierbei werden haloalkylierte Polymere aminiert und das aminierte Polymere mit Chloressigsäure zu Chelatharzen vom Iminodiessigsäuretyp umgesetzt.

Nachteilig an diesem Verfahren ist eine Nachvernetzung auf der Verfahrensstufe der haloalkylierten Perlpolymerisate sowie der nachfolgenden Verfahrensstufe der aminomethylierten Perlpolymerisate. Die Nachteile der Nachvernetzung aus beiden Stufen und ein Verfahren zu ihrer Minimierung werden in der EP-A 0 481 603 beschrieben.

Bisher nicht bekannt und daher Gegenstand der vorliegenden Erfindung sind monodisperse Chelatharze, die unter Vermeidung der haloalkylierten Zwischenstufe hergestellt werden.

Durch das erfindungsgemäße Verfahren entfällt eine Nachvernetzung.

Die erfindungsgemäßen Produkte sind in ihrer Struktur einheitlich. Überraschenderweise wurde gefunden, dass durch die fehlende Nachvernetzung ein höherer Substitutionsgrad der aromatischen Kerne mit funktionellen Gruppen erzielt werden kann und damit eine höhere Austauschkapazität im Endprodukt erzielt wird. Darüber hinaus ist die Ausbeute an Endprodukt, bezogen auf die eingesetzten Monomere deutlich höher als bei Endprodukten, die gemäß dem Stand der Technik hergestellt werden.

Gegenstand der vorliegenden Erfindung ist ein Verfahren zur Herstellung monodisperser Ionenaustauscher mit chelatisierenden, funktionellen Gruppen, dadurch gekennzeichnet, dass man
a) mit einem Komplexkoazervat mikroverkapselte Monomertröpfchen mit einer mittleren Teilchengröße von 10 - 1000 µm aus mindestens einer monovinylaromatischen Verbindung und mindestens einem Vernetzer in Gegenwart eines oder mehrerer Schutzkolloide und in Gegenwart mindestens eines Initiators zu einem monodispersen, vernetzten Perlpolymerisat umsetzt, wobei als monovinylaromatische Verbindung Styrol eingesetzt wird,
b) dieses monodisperse, vernetzte Perlpolymerisat in einem inerten Lösungsmittel, das geeignet ist das Polymer zu quellen, mit einem Bis(phthalimido)ether amidomethyliert,
c) das amidomethylierte Perlpolymerisat mit einer wässrigen oder alkoholischen Lösung von Natriumhydroxid bei Temperaturen zwischen 100 und 250°C zu aminomethylierten Perlpolymerisat umsetzt, wobei die Konzentration der Natronlauge im Bereich von 10 bis 50 Gew.-% liegt und das entstehende aminomethylierte Perlpolymerisat mit vollentsalztem Wasser alkalifrei gewaschen wird und
d) das aminomethylierte Perlpolymerisat durch Umsetzung in Suspension mit Verbindungen, die schließlich als funktionalisiertes Amin chelatisierende Eigenschaften entwickeln, wobei als Suspensionsmedium Wasser oder wässrige Mineralsäuren in Konzentrationen zwischen 10 und 40 Gew.-% eingesetzt werden und als Reagenzien Chloressigsäure und ihre Derivate, Formalin in Kombination mit P-H aciden Verbindungen, Formalin in Kombination mit S-H aciden Verbindungen oder Formalin in Kombination mit Hydroxychinolin und dessen Derivate eingesetzt werden.

Die erfindungsgemäß herzustellenden Ionenaustauscher mit den oben beschriebenen Eigenschaften erhält man dabei, ohne dass eine Nachvernetzung stattfindet. Darüber hinaus zeigen die gemäß vorliegender Erfindung hergestellten monodispersen Ionenaustauscher mit chelatisierenden Gruppen
- eine deutlich bessere Entfernung von Schwermetallen und Edelmetallen aus wässrigen Lösungen oder organischen Flüssigkeiten oder deren Dämpfen, besonders von Quecksilber aus wässrigen Lösungen von Erdalkalien und Alkalien, insbesondere eine Entfernung von Quecksilber aus Solen der Alkalichloridelektrolyse,
- eine deutlich bessere Entfernung von Schwermetallen, insbesondere Quecksilber und Arsen, aus wässrigen Salzsäuren insbesondere aus Abwässern von Rauchgaswäschen, aber auch aus Deponie-Sickwässern und Grundwässern,
- eine deutlich bessere Entfernung von Schwermetallen, insbesondere Quecksilber und Arsen und Edelmetallen, aus flüssigen oder gasförmigen Kohlenwasserstoffen wie Erdgasen, Erdgaskondensaten und Erdölen oder HalogenKohlenwasserstoffen wie Chlor- oder Fluorkohlenwasserstoffen,
- eine deutlich bessere Entfernung von Elementen der Platingruppe sowie Gold oder Silber aus wässrigen oder organischen Lösungen, sowie
- eine deutlich bessere Entfernung von Rhodium oder Elementen der Platingruppe sowie Gold oder Silber oder Rhodium oder Edelmetall-enthaltende Katalysatorreste aus organischen Lösungen oder Lösemitteln,
- eine deutlich bessere Entfernung von Erdalkalien wie Magnesium, Calcium, Barium oder Strontium aus wässrigen Solen, wie sie in der Chloralkalielektrolyse üblicherweise anfallen,
als die aus dem Stand der Technik bekannten Chelatharze.

Die erfindungsgemäß herzustellenden Ionenaustauscher eignen sich deshalb hervorragend für die verschiedensten Einsatzgebiete in der chemischen Industrie, der Elektronik-Industrie, der Abfall-Entsorgungs/Verwertungs-Industrie oder der Galvano- oder Oberflächentechnik.

Das monodisperse, vernetzte, vinylaromatische Grundpolymerisat gemäß Verfahrensschritt a) kann nach den aus der Literatur bekannten Verfahren hergestellt werden. Beispielsweise werden solche Verfahren in US-A 4 444 961, EP-A 0 046 535, US 4 419 245 oder WO 93/12167 beschrieben.

In Verfahrensschritt a) wird mindestens eine monovinylaromatische Verbindung und mindestens ein Vernetzer eingesetzt. Es ist jedoch auch möglich, Mischungen zweier oder mehrerer monovinylaromatischer Verbindungen und Mischungen zweier oder mehrerer Vernetzer einzusetzen.

Als monovinylaromatische Verbindungen im Sinne der vorliegenden Erfindung wird Styrol eingesetzt oder Mischungen aus Styrol mit den Monomeren, Vinyltoluol, Ethylstyrol, α-Methylstyrol, Chlorstyrol, Chlormethylstyrol, Acrylsäurealkylester und Methacrylsäurealkylester.

Bevorzugte Vernetzer im Sinne der vorliegenden Erfindung sind für Verfahrensschritt a) multifunktionelle ethylenisch ungesättigte Verbindungen wie beispielsweise Divinylbenzol, Divinyltoluol, Trivinylbenzol, Divinylnaphtalin, Trivinylnaphtalin, 1,7-Octadien, 1,5-Hexadien, Ethylenglycoldimethacrylat, Trimethylolpropantrimethacrylat oder Allylmethacrylat.

Die Vernetzer werden im allgemeinen in Mengen von 1-20 Gew.-%, vorzugsweise 2-12 Gew.-%, besonders bevorzugt 4-10 Gew.-%, bezogen auf das Monomer oder dessen Mischung mit weiteren Monomeren eingesetzt. Die Art der Vernetzer wird im Hinblick auf die spätere Verwendung des kugelförmigen Polymerisats ausgewählt. Divinylbenzol ist in vielen Fällen geeignet. Für die meisten Anwendungen sind kommerzielle Divinylbenzolqualitäten, die neben den Isomeren des Divinylbenzols auch Ethylvinylbenzol enthalten, ausreichend.

In Verfahrensschritt a) kommen mikroverkapselte Monomertröpfchen zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane, Polyharnstoffe.

Als natürliches Polyamid ist beispielsweise Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente (beispielsweise ein Isocyanat oder ein Säurechlorid) mit einer zweiten, in der wässrigen Phase gelösten Reaktivkomponente (beispielsweise einem Amin), zur Reaktion gebracht wird.

Die mikroverkapselten Monomertröpfchen enthalten einen Initiator oder Mischungen von Initiatoren zur Auslösung der Polymerisation. Für das erfindungsgemäße Verfahren geeignete Initiatoren sind beispielsweise Peroxyverbindungen wie Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylper-oxy-2-ethylhexan, sowie Azoverbindungen wie 2,2'-Azobis(isobutyronitril) oder 2,2'-Azobis(2-methylisobutyronitril).

Die Initiatoren werden im allgemeinen in Mengen von 0,05 bis 2,5 Gew.%, vorzugsweise 0,1 bis 1,5 Gew.%, bezogen auf die Monomeren-Mischung, angewendet.

Als weitere Zusätze in den mikroverkapselten Monomertröpfchen können gegebenenfalls Porogene verwendet werden, um im kugelförmigen Polymerisat eine Vernetze makroporöse Struktur zu erzeugen. Hierfür sind organische Lösungsmittel geeignet, die das entstandene Polymerisat schlecht lösen bzw. quellen. Beispielhaft seien Hexan, Octan, Isooctan, Isododecan, Methylethylketon, Butanol oder Octanol und deren Isomeren genannt.

Die Begriffe mikroporös oder gelförmig bzw. makroporös sind in der Fachliteratur bereits eingehend beschrieben worden.

Bevorzugte Perlpolymerisate im Sinne der vorliegenden Erfindung, hergestellt durch Verfahrensschritt a), weisen eine makroporöse Struktur auf.

Als monodisperses werden in der vorliegenden Anmeldung solche Stoffe bezeichnet, bei dem mindestens 90 Volumen- oder Massen-% der Teilchen einen Durchmesser besitzen, der in dem Intervall mit der Breite von ± 10 % des häufigsten Durchmesser um den häufigsten Durchmesser herum liegt.

Zum Beispiel bei einem Stoff mit häufigstem Durchmesser von 0,5 mm liegen mindestens 90-Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

Die Ausbildung monodisperser, makroporöser Perlpolymerisate kann beispielsweise durch Zusatz von Inertmaterialien (Porogene) zu der Monomermischung bei der Polymerisation erfolgen. Als solche sind vor allem organische Substanzen geeignet, die sich im Monomeren lösen, das Polymerisat aber schlecht lösen bzw. quellen (Fällmittel für Polymere) beispielsweise aliphatische Kohlenwasserstoffe (Farbenfabriken Bayer DBP 1045102, 1957; DBP 1113570 , 1957).

In US 4 382 124 werden als Porogen beispielsweise Alkohole mit 4 bis 10 Kohlenstoffatomen zur Herstellung monodisperser, makroporöser Perlpolymerisate auf Styrol/Divinylbenzol-Basis eingesetzt. Ferner wird eine Übersicht der Herstellmethoden makroporöser Perlpolymerisate gegeben.

Das mikroverkapselte Monomertröpfchen kann gegebenenfalls auch bis zu 30 Gew.% (bezogen auf das Monomer) vernetztes oder unvernetztes Polymer enthalten. Bevorzugte Polymere leiten sich aus den vorgenannten Monomeren, besonders bevorzugt von Styrol, ab.

Die mittlere Teilchengröße der verkapselten Monomertröpfchen beträgt 10 - 1000 µm, vorzugsweise 100 - 1000 µm. Das erfindungsgemäße Verfahren ist auch zur Herstellung monodisperser kugelförmiger Polymerisate gut geeignet.

Bei der Herstellung der monodispersen Perlpolymerisate gemäß Verfahrensschritt a) kann die wässrige Phase gegebenenfalls einen gelösten Polymerisationsinhibitor enthalten. Als Inhibitoren im Sinne der vorliegenden Erfindung kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere geeignete organische Inhibitoren sind stickstoffhaltige Verbindungen. Hierzu gehören Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxyl-aminderivate, Hydrazinderivate wie beispielsweise N,N-Hydrazinodiessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors besträgt 5 - 1000 ppm (bezogen auf die wässrige Phase), vorzugsweise 10 - 500 ppm, besonders bevorzugt 10 - 250 ppm.

Die Polymerisation der mikroverkapselten Monomertröpfchen zum kugelförmigen, monodispersen Perlpolymerisat erfolgt, wie bereits oben erwähnt, in Anwesenheit eines oder mehrerer Schutzkolloide in der wässrigen Phase. Als Schutzkolloide eignen sich natürliche oder synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth)acrylsäure und (Meth)-acrylsäureestern. Sehr gut geeignet sind auch Cellulosederivate, insbesondere Celluloseester und Celluloseether, wie Carboxymethylcellulose Methylhydroxyethylcellulose, Methylhydroxypropylcellulose und Hydroxyethylcellulose. Besonders gut geeignet ist Gelatine. Die Einsatzmenge der Schutzkolloide beträgt im allgemeinen 0,05 bis 1 Gew.-% bezogen auf die wässrige Phase, vorzugsweise 0,05 bis 0,5 Gew.-%.

Die Polymerisation zum kugelförmigen, monodispersen, makroporösen Perlpolymerisat in Verfahrensschritt a) kann gegebenenfalls auch in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung, umfassen auch die Kondensationsprodukte der ortho-Formen entsprechender Säuren und Salze. Die Konzentration des Phosphats bzw. Borat in der wässrigen Phase beträgt 0,5 - 500 mmol/l, vorzugsweise 2,5 - 100 mmol/l.

Die Rührgeschwindigkeit bei der Polymerisation ist weniger kritisch und hat im Gegensatz zur herkömmlichen Perlpolymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt 1 : 0,75 bis 1 : 20, vorzugsweise 1 : 1 bis 1 : 6.

Die Polymerisationstemperatur richtet sich nach der Zerfallstemperatur des eingesetzten Initiators. Sie liegt im allgemeinen zwischen 50 bis 180°C, vorzugsweise zwischen 55 und 130°C. Die Polymerisation dauert 0,5 bis einige Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das Polymerisat mit üblichen Methoden, beispielsweise durch Filtrieren oder Dekantieren, isoliert und gegebenenfalls gewaschen.

Im Verfahrensschritt b) wird zunächst das Amidomethylierungsreagens hergestellt. Dazu wird beispielsweise Phthalimid oder ein Phthalimidderivat in einem Lösungsmittel gelöst und mit Formalin versetzt. Anschließend wird unter Wasserabspaltung hieraus ein Bis-(Phthalimido)ether gebildet. Der Bis-(Phthalimido)ether kann gegebenenfalls zum Phthalimidoester umgesetzt werden. Bevorzugte Phthalimidderivate im Sinne der vorliegenden Erfindung sind Phthalimid selber oder substituierte Phthalimide, beispielsweise Methylphthalimid.

Als Lösungsmittel kommen im Verfahrensschritt b) inerte Lösungsmittel zum Einsatz, die geeignet sind, das Polymer zu quellen, bevorzugt chlorierte Kohlenwasserstoffe, besonders bevorzugt Dichlorethan oder Methylenchlorid.

Im Verfahrensschritt b) wird das Perlpolymerisat mit Phthalimidderivaten kondensiert. Als Katalysator wird hierbei Oleum, Schwefelsäure oder Schwefeltrioxid eingesetzt.

Die Abspaltung des Phthalsäurerestes und damit die Freilegung der Aminomethylgruppe erfolgt im Verfahrensschritt c) durch Behandeln des phthalimidomethylierten vernetzten Perlpolymerisates mit wässrigen oder alkoholischen Lösungen von Natriumhydroxid bei Temperaturen zwischen 100 und 250°C, vorzugsweise 120 - 190°C. Die Konzentration der Natronlauge liegt im Bereich von 10 bis 50 Gew.-%, vorzugsweise 20 bis 40 Gew.-%. Dieses Verfahren ermöglicht die Herstellung aminoalkylgruppenhaltiger vernetzter Perlpolymerisate mit einer Substitution der aromatischen Kerne größer 1.

Das dabei entstehende aminomethylierte Perlpolymerisat wird schließlich mit vollentsalztem Wasser alkalifrei gewaschen.

Im Verfahrensschritt d) erfolgt die Herstellung der erfindungsgemäßen Ionenaustauscher durch Umsetzung des Aminomethylgruppen-haltigen monodispersen, vernetzten, vinylaromatischen Grundpolymerisates in Suspension mit Verbindungen, die schließlich als funktionalisiertes Amin chelatisierende Eigenschaften entwickeln.

Als Reagenzien werden im Verfahrensschritt d) Chloressigsäure und ihre Derivate, Formalin in Kombination mit P-H aciden (nach modifizierter Mannich Reaktion) Verbindungen wie phosphorige Säure, Monoalkylphosphorigsäureester, Dialkylphosphorigsäureester, Formalin in Kombination mit S-H aciden Verbindungen wie Thioglykolsäure, Alkylmercaptanen, L-Cystein oder Formalin in Kombination mit Hydroxychinolin und dessen Derivate eingesetzt.

Besonders bevorzugt werden Chloressigsäure oder Formalin in Kombination mit P-H aciden Verbindungen wie phosphorige Säure eingesetzt.

Als Suspensionsmedium wird Wasser oder wässrige Mineralsäure eingesetzt, bevorzugt Wasser, wässrige Salzsäure oder wässrige Schwefelsäure in Konzentrationen zwischen 10 und 40 Gew.-%, bevorzugt 20 bis 35 Gew.- %.

Bevorzugt entstehen durch das erfindungsgemäße Verfahren monodisperse Ionenaustauscher mit den chelatisierenden Gruppen, die sich während des Verfahrensschritts d) ausbilden: 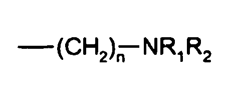 worin
R₁ für Wasserstoff oder einen Rest CH₂-COOH oder CH₂ P(O)(OH)₂ steht
R₂ für einen Rest CH₂COOH oder CH₂P(O)(OH)₂ steht und
n für eine ganze Zahl zwischen 1 und 4 steht.

Die erfindungsgemäß herzustellenden Ionenaustauscher mit chelatisierenden funktionellen Gruppen weisen bevorzugt eine makroporöse Struktur auf.

Die erfindungsgemäß hergestellten Ionenaustauscher mit chelatisierenden funktionellen Gruppen eignen sich zur Adsorbtion von Metallen, insbesondere Schwermetallen und Edelmetallen und ihren Verbindungen aus wässrigen Lösungen und organischen Flüssigkeiten. Die erfindungsgemäß hergestellten Ionenaustauscher mit chelatisierenden Gruppen eignen sich besonders zur Entfernung von Schwermetallen oder Edelmetallen aus wässrigen Lösungen, insbesondere aus wässrigen Lösungen von Erdalkalien oder Alkalien, aus Solen der Alkalichloridelektrolyse, aus wässrigen Salzsäuren, aus Abwässern oder Rauchgaswäschen, aber auch aus flüssigen oder gasförmigen Kohlenwasserstoffen, Carbonsäuren wie Adipinsäure, Glutarsäure oder Bernsteinsäure, Erdgasen, Erdgaskondensaten, Erdölen oder Halogenkohlenwasserstoffen, wie Chlor- oder Fluorkohlenwasserstoffen oder Fluor/Chlor-Kohlenwasserstoffen. Darüber hinaus eignen sich die erfindungsgemäß hergestellten Ionenaustauscher zur Entfernung von Erdalkalimetallen aus Solen, wie sie üblicherweise in der Alkalichloridelektrolyse eingesetzt werden. Die erfindungsgemäß hergestellten Ionenaustauscher eignen sich aber auch zur Entfernung von Schwermetallen, insbesondere Eisen, Cadmium oder Blei aus Stoffen die während einer elektrolytischen Behandlung, beispielsweise einer Dimerisierung von Acrylnitril zu Adiponitril, umgesetzt werden.

Ganz besonders geeignet sind die erfindungsgemäß hergestellten Ionenaustauscher zur Entfernung von Quecksilber, Eisen, Cobalt, Nickel, Kupfer, Zink, Blei, Cadmium, Mangan, Uran, Vanadium, Elementen der Platingruppe sowie Gold oder Silber aus den oben aufgeführten Lösungen, Flüssigkeiten oder Gasen.

Insbesondere eignen sich die erfindungsgemäß hergestellten Ionenaustauscher zur Entfernung von Rhodium oder Elementen der Platingruppe sowie Gold, Silber oder Rhodium oder Edelmetall-enthaltende Katalysatorreste aus organischen Lösungen oder Lösemitteln.

### Bestimmung der Menge an chelatisierenden Gruppen - Totalkapazität (TK) des Harzes

100 ml Austauscher werden in eine Filtersäule gefüllt und mit 3 gew.-%iger Salzsäure in 1,5 Stunden eluiert. Dann wird mit vollentsalztem Wasser gewaschen bis der Ablauf neutral ist.

50 ml regenerierter Ionenaustauscher werden in einer Säule mit 0,1 n Natronlauge (= 0,1 normaler Natronlauge) beaufschlagt. Den Ablauf fängt man jeweils in einem 250 ml Meßkolben auf und titriert die gesamte Menge gegen Methylorange mit 1n Salzsäure.

Es wird solange aufgegeben, bis 250 ml Ablauf einen Verbrauch von 24,5-25 ml an 1n Salzsäure haben. Nach beendeter Prüfung bestimmt man das Volumen des Austauschers in der Na-Form.

Totalkapazität (TK) = (X·25-Σ V)·2·10⁻² in mol/l Austauscher.

X = Zahl der Ablauffraktionen

ΣV = Gesamtverbrauch in ml an 1n Salzsäure bei der Titration der Abläufe.

### Beispiele

### Beispiel 1

### 1a) Herstellung des monodispersen, makroporösen Perlpolymerisates auf der Basis von Styrol , Divinylbenzol und Ethylstyrol

In einem 10 1 Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g von mikroverkapselten Monomertröpfchen mit enger Teilchengrössenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt. Die mittlere Teilchengröße der Monomertröpfchen beträgt 460 µm.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet. Man erhält 1893 g eines kugelförmigen Polymerisates mit einer mittleren Teilchengröße von 440 m, enger Teilchengrößenverteilung und glatter Oberfläche.

Das Polymerisat ist in der Aufsicht kreidig weiß und weist eine Schüttdichte von ca. 370 g/l auf.

### 1b) Herstellung des amidomethylierten Perlpolymerisates

Bei Raumtemperatur werden 2373 g Dichlorethan, 705 g Phthalimid und 505 g 29,2 gew.-%iges Formalin vorgelegt .Der pH Wert der Suspension wird mit Natronlauge auf 5,5 bis 6 eingestellt.Anschließend wird das Wasser destillativ entfernt. Dann werden 51,7 g Schwefelsäure zudosiert. Das entstehende Wasser wird destillativ entfernt. Der Ansatz wird abgekühlt. Bei 30°C werden 189 g 65 %iges Oleum und anschließend 371,4 g monodisperses Perlpolymerisat, hergestellt nach Verfahrensschritt 1a) eindosiert. Die Suspension wird auf 70°C erhitzt und weitere 6 Stunden bei dieser Temperatur gerührt. Die Reaktionsbrühe wird abgezogen, voll entsalztes Wasser wird hinzudosiert und Restmengen an Dichlorethan werden destillativ entfernt.

### Ausbeute an amidomethyliertem Perlpolymerisat : 2140 ml

Elementaranalytische Zusammensetzung:

| | |
|---|---|
| Kohlenstoff: | 75,3 Gew. %; |
| Wasserstoff: | 4,9 Gew. %; |
| Stickstoff: | 5,8 Gew. %; |
| Rest: | Sauerstoff: |

### 1c) Herstellung des aminomethylierten Perlpolymerisates

Zu 2100 ml amidomethyliertem Perlpolymerisat werden 1019 g 45 gew.-%ige Natronlauge und 406 ml vollentsalztes Wasser bei Raumtemperatur zudosiert. Die Suspension wird auf 180°C erhitzt und 6 Stunden bei dieser Temperatur gerührt.

Das erhaltene Perlpolymerisat wird mit vollentsalztem Wasser gewaschen.

Ausbeute an aminomethyliertem Perlpolymerisat : 1770 ml

Als Gesamtausbeute - hochgerechnet - ergeben sich 1804 ml

Elementaranalytische Zusammensetzung : Stickstoff : 11,75 Gew. %

Aus der elementaranalytischen Zusammensetzung des aminomethylierten Perlpolymerisates lässt sich errechnen, dass im statistischen Mittel pro aromatischem Kern - herrührend aus den Styrol und Divinylbenzoleinheiten - 1,17 Wasserstoffatome durch Aminomethylgruppen substituiert wurden.

### 1d) Herstellung des Ionenaustauschers mit chelatisierenden Gruppen

Zu 1890 ml vollentsalztem Wasser werden bei Raumtemperatur 1180 ml aminomethyliertes Perlpolymerisat aus Beispiel 1c) dosiert. Zu dieser Suspension werden 729,2 g Natriumsalz der Monochloressigsäure dosiert. Es wird 30 Minuten bei Raumtemperatur gerührt. Dann wird der pH-Wert der Suspension mit 20 gew.-%iger Natronlauge auf pH 10 eingestellt. In 2 Stunden wird die Suspension auf 80°C erhitzt. Anschließend wird weitere 10 Stunden bei dieser Temperatur gerührt. Während dieser Zeit wird der pH bei 10 durch kontrollierte Natronlaugezugabe gehalten.

Danach wird die Suspension abgekühlt. Das Harz wird mit vollentsalztem Wasser chloridfrei gewaschen.

Ausbeute: 2190 ml

Totalkapazität des Harzes: 2,39 mol/l Harz

## Patentansprüche

1. Verfahren zur Herstellung monodisperser Ionenaustauscher mit chelatisierenden funktionellen Gruppen, **dadurch gekennzeichnet, dass** man
a) mit einem Komplexkoazervat mikroverkapselte Monomertröpfchen mit einer mittleren Teilchengröße von 10 - 1000 µm aus mindestens einer monovinylaromatischen Verbindung und mindestens einem Vernetzer in Gegenwart eines oder mehrerer Schutzkolloide und in Gegenwart mindestens eines Initiators zu einem monodispersen, vernetzten Perlpolymerisat umsetzt, wobei als monovinylaromatische Verbindung Styrol eingesetzt wird,
b) dieses monodisperse, vernetzte Perlpolymerisatin einem inerten Lösungsmittel, das geeignet ist das Polymer zu quellen, mit einem Bis-(phthalimido)ether amidomethyliert,
c) das amidomethylierte Perlpolymerisat mit einer wässrigen oder alkoholischen Lösung von Natriumhydroxid bei Temperaturen zwischen 100 und 250°C zu aminomethyliertem Perlpolymerisat umsetzt, wobei die Konzentration der Natronlauge im Bereich von 10 bis 50 Gew.-% liegt und das entstehende aminomethylierte Perlpolymerisat mit vollentsalztem Wasser alkalifrei gewaschen wird und
d) das aminomethylierte Perlpolymerisat durch Umsetzung in Suspension mit Verbindungen, die schließlich als funktionalisiertes Amin chelatisierende Eigenschaften entwickeln, wobei als Suspensionsmedium Wasser oder wässrige Mineralsäuren in Konzentrationen zwischen 10 und 40 Gew.-% eingesetzt werden und als Reagenzien Chloressigsäure und ihre Derivate, Formalin in Kombination mit P-H aciden Verbindungen, Formalin in Kombination mit S-H aciden Verbindungen oder Formalin in Kombination mit Hydroxychinolin und dessen Derivate eingesetzt werden.

2. Verfahren gemäß Anspruch 1, **dadurch gekennzeichnet, dass** als Komplexkoazervat Polyester, natürliche und synthetische Polyamide, Polyurethane, Polyharnstoffe eingesetzt werden.

3. Verfahren gemäß der Ansprüche 1 oder 2, **dadurch gekennzeichnet, dass** die Monomertröpfchen Porogene enthalten und nach der Polymerisation makroporöse, vernetzte Perlpolymerisate bilden.

4. Verfahren gemäß der Ansprüche 1 bis 3, **dadurch gekennzeichnet, dass** in Verfahrensschritt a) ein Polymerisationsinhibitor eingesetzt wird.

5. Verfahren gemäß Anspruch 1, **dadurch gekennzeichnet, dass** als Schutzkolloide Gelatine, Stärke, Polyvinylalkohol, Polyvinylpyrrolidon, Polyacrylsäure, Polymethacrylsäure oder Copolymerisate aus (Meth)acrylsäure oder (Meth)acrylsäureester eingesetzt werden.

6. Verfahren gemäß Anspruch 1, **dadurch gekennzeichnet, dass** als Vernetzer Divinylbenzol, Divinyltoluol, Trivinylbenzol, Divinylnaphthalin, Trivinylnaphthalin, 1,7-Octadien, 1,5-Hexadien, Ethylenglycoldimethacrylat, Trimethylolpropantrimethacrylat oder Allylmethacrylat eingesetzt werden.

7. Verfahren gemäß Anspruch 1, **dadurch gekennzeichnet, dass** als Initiator Peroxyverbindungen wie Dibenzoylperoxid, Dilauroylperoxid, Bis-(p-chlorbenzoyl)-peroxid, Dicyclohexylperoxydicarbonat, tert.-Butylperoctoat, tert.-Butylperoxy-2-ethyl-hexanoat, 2,5-Bis-(2-ethylhexanoylperoxy)-2,5-dimethylhexan oder tert.-Amylperoxy-2-ethylhexan, sowie Azoverbindungen wie 2,2'-Azobis(isobutyronitril) oder 2,2'-Azobis-(2-methylisobutyronitril) eingesetzt werden.

8. Verfahren gemäß Anspruch 1, **dadurch gekennzeichnet, dass** der Bis-(phthalimido)ether aus Phthalimid oder seinen Derivaten und Formalin hergestellt wird.

9. Verfahren gemäß Anspruch 8, **dadurch gekennzeichnet, dass** die Reaktion des Bis(phthalimido)ethers mit dem Perlpolymerisat in Gegenwart von Oleum, Schwefelsäure oder Schwefeltrioxid stattfindet.

10. Verfahren gemäß einem der vorrangigen Ansprüche 1 bis 9, **dadurch gekennzeichnet, dass** das Styrol in Mischung mit den Monomeren Vinyltoluol, Ethylstyrol, α-Methylstyrol, Chlorstyrol, Chlormethylstyrol, Acrylsäurealkylester und Methacrylsäurealkylester eingesetzt wird.

## Claims

1. Process for preparing monodisperse ion exchangers having chelating functional groups, **characterized in that**
a) monomer droplets which have an average particle size of from 10 to 1000 µm and which are made of at least one monovinylaromatic compound and of at least one crosslinking agent and which have been microencapsulated by a complex coacervate are reacted in the presence of one or more protective colloids and in the presence of at least one initiator to give a monodisperse, crosslinked bead polymer, where the monovinylaromatic compound used comprises styrene,
b) the said monodisperse, crosslinked bead polymer is amidomethylated by a bis(phthalimido) ether in an inert solvent which is suitable for swelling the polymer,
c) the amidomethylated bead polymer is reacted with an aqueous or alcoholic solution of sodium hydroxide at temperatures of from 100 to 250°C to give aminomethylated bead polymer, where the concentration of the sodium hydroxide solution is in the range from 10 to 50% by weight and the resultant aminomethylated bead polymer is washed with demineralized water until free from alkali and
d) the aminomethylated bead polymer is converted via reaction suspension with compounds which finally develop properties of chelation in the form of functionalized amine, where the suspension medium used comprises water or aqueous mineral acids in concentrations of from 10 to 40% by weight, and reagents used comprise chloroacetic acid and its derivatives, formalin in combination with P-H-acidic compounds, formalin in combination with S-H-acidic compounds or formalin in combination with hydroxyquinoline and derivatives thereof.

2. Process according to Claim 1, **characterized in that** the complex coacervate used comprises polyesters, natural and synthetic polyamides, polyurethanes, polyureas.

3. Process according to Claims 1 or 2, **characterized in that** the monomer droplets comprise porogens and, after the polymerization, form macroporous, crosslinked bead polymers.

4. Process according to Claims 1 to 3, **characterized in that** a polymerization inhibitor is used in process step a).

5. Process according to Claim 1, **characterized in that** the protective colloids used comprise gelatine, starch, polyvinyl alcohol, polyvinylpyrrolidone, polyacrylic acid, polymethacrylic acid or copolymers made from (meth)acrylic acid or (meth)acrylate.

6. Process according to Claim 1, **characterized in that** the crosslinking agents used comprise divinylbenzene, divinyltoluene, trivinylbenzene, divinylnaphthalene, trivinylnaphthalene, 1,7-octadiene, 1,5-hexadiene, ethylene glycol dimethacrylate, trimethylolpropane trimethacrylate or allyl methacrylate.

7. Process according to Claim 1, **characterized in that** the initiator used comprises peroxy compounds, such as dibenzoyl peroxide, dilauroyl peroxide, bis-(p-chlorobenzoyl) peroxide, dicyclohexyl peroxydicarbonate, tert-butyl peroctoate, tert-butyl peroxy-2-ethylhexanoate, 2,5-bis-(2-ethylhexanoylperoxy)-2,5-dimethylhexane or tert-amylperoxy-2-ethylhexane, or else azo compounds, such as 2,2'-azobis(isobutyronitrile) or 2,2'-azobis-(2-methylisobutyronitrile).

8. Process according to Claim 1, **characterized in that** the bis(phthalimido) ether is prepared from phthalimide or from its derivatives and formalin.

9. Process according to Claim 8, **characterized in that** the reaction of the bis(phthalimido) ether with the bead polymer takes place in the presence of oleum, sulphuric acid or sulphur trioxide.

10. Process according to any of the preceding Claims 1 to 9, **characterized in that** styrene is used in a mixture with the monomers vinyltoluene, ethylstyrene, α-methylstyrene, chlorostyrene, chloromethylstyrene, alkyl acrylates and alkyl methacrylates.

## Revendications

1. Procédé pour la préparation d'échangeurs d'ions monodispersés présentant des groupes fonctionnels chélatants, **caractérisé en ce qu'**on
a) transforme des gouttes de monomère, micro-encapsulées par un coacervat complexe, présentant une grosseur moyenne de particule de 10-1000 µm, constituées par au moins un composé monovinylaromatique et au moins un réticulant en présence d'un ou de plusieurs colloïdes de protection et en présence d'au moins un initiateur en un polymère en perles monodispersé, réticulé, en utilisant du styrène comme composé monovinylaromatique,
b) amidométhyle ce polymère en perles monodispersé, réticulé, dans un solvant inerte, qui convient pour gonfler le polymère, avec un bis-(phtalimido)éther,
c) transforme le polymère en perles amidométhylé avec une solution aqueuse ou alcoolique d'hydroxyde de sodium à des températures entre 100 et 250°C en polymère en perles aminométhylé, la concentration en lessive de soude caustique se situant dans la plage de 10 à 50% en poids et le polymère en perles aminométhylé formé étant lavé avec de l'eau déminéralisée jusqu'à l'absence d'alcalis et
d) laisse réagir le polymère en perles aminométhylé par transformation en suspension avec des composés qui développent en fin de compte, en tant qu'amine fonctionnalisée, des propriétés chélatisantes, en utilisant comme milieu de suspension de l'eau ou des acides minéraux aqueux en des concentrations entre 10 et 40% en poids et comme réactifs de l'acide chloroacétique et ses dérivés, de la formaline en combinaison avec des composés P-H acides, de la formaline en combinaison avec des composés S-H acides ou de la formaline en combinaison avec de l'hydroxyquinoléine et ses dérivés.

2. Procédé selon la revendication 1, **caractérisé en ce qu'**on utilise, comme coacervat complexe, des polyesters, des polyamides, des polyuréthanes, des polyurées naturel(le)s et synthétiques.

3. Procédé selon les revendications 1 ou 2, **caractérisé en ce que** les gouttes de monomère contiennent des agents porogènes et forment, après la polymérisation, des polymères en perles, macroporeux, réticulés.

4. Procédé selon les revendications 1 à 3, **caractérisé en ce qu'**on utilise un inhibiteur de polymérisation dans l'étape de procédé a).

5. Procédé selon la revendication 1, **caractérisé en ce qu'**on utilise comme colloïde de protection de la gélatine, de l'amidon, du poly(alcool vinylique), de la polyvinylpyrrolidone, du poly(acide acrylique), du poly(acide méthacrylique) ou des copolymères d'acide (méth)acrylique ou d'esters de l'acide (méth)acrylique.

6. Procédé selon la revendication 1, **caractérisé en ce qu'**on utilise comme réticulant du divinylbenzène, du divinyltoluène, du trivinylbenzène, du divinylnaphtalène, du trivinylnaphtalène, du 1,7-octadiène, du 1,5-hexadiène, du diméthacrylate d'éthylèneglycol, du triméthacrylate de triméthylolpropane ou du méthacrylate d'allyle.

7. Procédé selon la revendication 1, **caractérisé en ce qu'**on utilise comme initiateur des composés peroxy, tels que le peroxyde de dibenzoyle, le peroxyde de dilauroyle, le peroxyde de bis-(p-chlorobenzoyle), le dicyclohexylperoxydicarbonate, le peroctoate de tert-butyle, le peroxy-2-éthylhexanoate de tert-butyle, le 2,5-bis-(2-éthylhexanoylperoxy)-2,5-diméthylhexane ou le tert-amylperoxy-2-éthylhexane ainsi que des composés azo, tels que le 2,2'-azobis(isobutyronitrile) ou le 2,2'-azobis-(2-méthylisobutyronitrile).

8. Procédé selon la revendication 1, **caractérisé en ce que** le bis-(phtalimido)éther est préparé à partir de phtalimide ou ses dérivés et de formaline.

9. Procédé selon la revendication 8, **caractérisé en ce que** la réaction du bis(phtalimido)éther avec le polymère en perles a lieu en présence d'oléum, d'acide sulfurique ou de trioxyde de soufre.

10. Procédé selon l'une quelconque des revendications précédentes 1 à 9, **caractérisé en ce que** le styrène est utilisé en mélange avec les monomères vinyltoluène, éthylstyrène, α-méthylstyrène, chlorostyrène, chlorométhylstyrène, ester alkylique de l'acide acrylique et ester alkylique de l'acide méthacrylique.
